(19) Europäisches Patentamt
European Patent Office
Office européen des brevets

(11) **EP 1 421 422 B1**

(12) **EUROPEAN PATENT SPECIFICATION**

(45) Date of publication and mention
of the grant of the patent:
**12.08.2009 Bulletin 2009/33**

(51) Int Cl.:
***G02B 6/34*** (2006.01)

(21) Application number: **02712021.1**

(22) Date of filing: **30.01.2002**

(86) International application number:
**PCT/GB2002/000408**

(87) International publication number:
**WO 2002/101435 (19.12.2002 Gazette 2002/51)**

(54) **ARRAYED WAVEGUIDE GRATING WITH REDUCED CHROMATIC DISPERSION**

ARRAY-WELLENLEITERGITTER MIT VERRINGERTER CHROMATISCHER DISPERSION

RESEAU A GUIDES D'ONDES EN FAISCEAU A DISPERSION CHROMATIQUE REDUITE

(84) Designated Contracting States:
**AT BE CH CY DE DK ES FI FR GB GR IE IT LI LU MC NL PT SE TR**

(30) Priority: **11.06.2001 GB 0114140**

(43) Date of publication of application:
**26.05.2004 Bulletin 2004/22**

(73) Proprietor: **Gemfire Europe Limited
Livingston EH54 8SF (GB)**

(72) Inventors:
• **LANKER, Michael, William
CH-9436 Balgach (CH)**
• **VAN WEERDEN, Harm
NL-7546 GT Enschede (NL)**
• **VAN DER VLIET, Frederik, Marcel
NL-7514 AD Enschede (NL)**

(74) Representative: **Mills, Julia
D Young & Co
120 Holborn
London EC1N 2DY (GB)**

(56) References cited:
US-A- 5 629 992          US-A- 6 069 990
US-B1- 6 195 482          US-B1- 6 266 464

• SOLDANO L B ET AL: "OPTICAL MULTI-MODE INTERFERENCE DEVICES BASED ON SELF-IMAGING: PRINCIPLES AND APPLICATIONS" JOURNAL OF LIGHTWAVE TECHNOLOGY, IEEE. NEW YORK, US, vol. 13, no. 4, 1 April 1995 (1995-04-01), pages 615-627, XP000513578 ISSN: 0733-8724 cited in the application

**Description**

FIELD OF THE INVENTION

The present invention relates to planar optical waveguide devices, and in particular to arrayed waveguide grating (AWG) devices. More specifically, though not exclusively, the invention relates to passband flattening in AWGs and reducing chromatic dispersion in AWG designs which incorporate passband flattening features.

BACKGROUND ART

AWGs are now well-known components in the optical communications network industry. An AWG is a planar structure comprising a number of array waveguides which together act like a diffraction grating in a spectrometer. AWGs can be used as multiplexers and as demultiplexers, and a single AWG design can commonly be used both as a multiplexer and demultiplexer. The construction and operation of such AWGs is well known in the art. See for example, "PHASAR-based WDM-Devices: Principles, Design and Applications", M K Smit, IEEE Journal of Selected Topics in Quantum Electronics Vol.2, No.2, June 1996, US 5,002, 350 and WO97/23969.

An AWG commonly consists of at least one substantially single-mode input waveguide, first and second free space couplers (often called "slab couplers"), an array of waveguides connected between the slab couplers, and a plurality of substantially single mode output waveguides connected to the second slab coupler. In generally known manner, the array waveguides have predetermined optical path length differences therebetween, most commonly the difference in physical lengths of adjacent array waveguides is designed to be identical. In such AWGs, the passband of the output channels (i.e. plot of Insertion Loss against wavelength of the output channel) generally corresponds to the coupling of a Gaussian beam into a Gaussian waveguide, and is therefore itself Gaussian-shaped. In many situations it would be more desirable for the AWG to have a flat passband. This is generally because a Gaussian passband requires accurate control over emitted wavelengths, thus making it difficult to use in a system. Various ways of achieving a flat passband have been proposed, one way being to use "near field shaping". This involves creating a double-peaked mode field from the (single peak) input mode field. When this double-peaked field is convoluted with the single mode output waveguide, the resulting passband takes the form of a single, generally flat peak.

One way of creating the necessary double-peaked field is to use a Multi-Mode Interferometer (MMI) or generally rectangular multi-mode waveguide on the end of a single-mode input waveguide, adjacent the first slab coupler, as described by Amersfoort in US5,629,992. The discontinuous transition between the single mode input waveguide and the MMI/multi-mode waveguide generates higher order modes from the single mode input signal and these multiple modes give rise to a double-peaked field at the output of the MMI/multi-mode waveguide. An alternative technique is to use a parabolic taper on the end of the input waveguide. This is described in JP9297228A. The parabolic taper gives rise to continuous and rapid mode expansion of the fundamental mode along the length of the taper. This rapid expansion causes excitation of the second order mode.This gives rise to a double-peaked field at the output end of the parabolic taper.

However, in such structures interference between the fundamental and second order modes, which are not necessarily in phase, causes a phase front that is not flat across the width of the multi-mode waveguide. It is here proposed that this non-flat phase front causes Chromatic Dispersion (CD) and Differential Group Delay (DGD) in the output signals from the AWG. Customers are increasingly specifying Chromatic Dispersion as one of the parameters of AWGs which they are most concerned about. The presence of CD and DGD leads to undesired widening of the signal pulse which limits the transmission capacity of the optical system.

It is an aim of the present invention to design a multi-mode waveguide for passband flattening, which avoids or minimizes chromatic dispersion in the optical device. More specifically, though not exclusively, it is an aim of the invention to design a multi-mode waveguide which avoids or minimizes undesirable phase differences between at least the fundamental and second order guided modes in order to avoid, or at least reduce, CD and/or DGD.

US-5,629,992 relates to an optical filter. The filter includes a multi-mode waveguide, being a multi-mode interference (MMI) filter that presents a flatter filter profile to reduce sensitivity to wavelength drift. The multi-mode waveguide is rectangular.

US-6193482 discloses a waveguide grating router having in some embodiments a tapered mu)timoding section on the input and output waveguide. According to a first aspect of the invention there is provided a method for manufacturing an AWG incorporating at least one passband flattening feature, comprising optimising the field response by the steps of:

choosing a passband flattening feature for incorporation in an AWG multiplexer/demultiplexer device, the feature having at least one variable shape parameter,
and the AWG comprising first and second free space couplers having a plurality of array waveguides optically coupled therebetween, at least one input waveguide optically coupled to an input side of the first free space coupler, and a plurality of output waveguides optically coupled to an output side of the second free space coupler; simulating a field response of the AWG at the output side of the second free space coupler, for a series of values of said at least one variable shape parameter; calculating the respective chromatic dispersion (CD) of the AWG from the simulated field response of the AWG at each value of the shape parameter; determining the optimum value of said shape parameter as the value which results in the lowest CD; and

providing the AWG with the passband flattening feature having the determined optimum value for said shape parameter.

The AWG device in the above-described inventive method preferably comprises first and second free space couplers having a plurality of array waveguides optically coupled therebetween, at least one input waveguide optically coupled to an input side of the first free space coupler (although in some cases there may be no input waveguides, as described in further detail later below), and a plurality of output waveguides optically coupled to an output side of the second free space coupler. The optical path length of the array waveguides increases incrementally by the same amount from one array waveguide to the next, and the array waveguides are arranged so that a multiplexed optical signal input at an input; side of the first free space coupler is dispersed by the array and the individual wavelength channel signals are re-focused on an output side of the second free space coupler (when the AWG device is used as a demultiplexer), at positions depending on the respective signal wavelength. The passband flattening feature may optically connect the input waveguide to the input side of the first free space coupler. Alternatively, a respective identical such passband flattening feature may optically connect each output waveguide to the output side of the second free space coupler. (This has the same passband flattening effect as placing the feature at the input side of the device.)

In its simplest form, the phase shifting waveguide may be a straight-sided, generally rectangular, waveguide having a width equal to the width of the end of the multi-mode : waveguide connected thereto. The multi-mode waveguide may, for example, be a tapered waveguide such as a parabolic waveguide, or another non-adiabatic tapered waveguide shape for exciting the second order mode.

In the described embodiments, the inventive method is applied to the design of multi-mode waveguide structures for passband flattening in AWGs. However, in principle, the inventive method can be applied to the design of any multi-mode waveguide in any optical component where chromatic dispersion caused by phase differences between modes is a problem. For example, the method can be applied to the design of a multi-mode waveguide for use in waveguide Rowland circle gratings as described in"Monolithic integrated wavelength demultiplexer based on a waveguide rowland circle grating in In GaAsP/InP", by J. J. He, B. Lamontagne, A. Delage, L. Erickson, M. Davies, and E. S.Koteles, in J. Lightwave Tech. 16,pp631-638, 1998.

The multi-mode waveguide may, for example, be an MMI, a parabolic taper (also known as a "parabolichorn"), or could be any other non-adiabatic waveguide structure which is used to excite higher order modes (above the fundamental mode), for example a segmented waveguide structure such as described in pending US patent application No US 2002 094 166 A. In the case of a simple straight-sided rectangular multi-mode waveguide, the inventive method may be employed by optimizing the length or width of this waveguide in order to achieve the desired phase condition. However, for other passband flattening features, particularly ones having complex shapes, the number of parameters which can be varied will increase (for example the length and width of each section of the segmented waveguide structure described in US 2002 094 166 A) and thus it may be more difficult to determine an optimum value for each parameter. However, in such cases the inventive method can be employed simply by carrying out simulations, most conveniently Beam Propagation Method (BPM) simulations, using different shape parameter values, and analyzing the resulting CD. values which the simulations predict, and using this data to optimize the variable parameters "empirically". It will be appreciated that this empirical. process could be carried out by suitably programmed computer means, if desired.

Preferred embodiments of the invention will now be described by way of example only and with reference to the accompanying drawings in which:

BRIEF DESCRIPTION OF THE DRAWINGS

Fig. 1 is a schematic plan view of an AWG incorporating a passband flattening feature in the form of an MMI;

Fig. 2 is a graph of Chromatic Dispersion(CD) vs. length of MMI, shown together with a graph of 1-db bandwidth vs. length of MMI ;

Fig. 3 is a graph of Phase difference (between $0^{th}$ and $2^{nd}$ order modes) vs. Length of MMI;

Fig. 4 illustrates how the passband can be flattened by generating a double-peak signal field;

Fig.5 (a) to (c) schematically illustrate an MMI, a parabolic horn and a stepped MMI respectively;

Fig. 6 (a) illustrates the Phase front of an output signal of the device of Fig.1, when the phase difference between the fundamental and $2^{nd}$ order mode is 3.14;

Fig. 6 (b) illustrates the Phase front of an output signal of the device of Fig.1, when the phase difference between the fundamental and $2^{nd}$ order mode is 3.0;

Fig. 7 is a graph illustrating the phase of two optical modes (of a signal) wher the phase diffemce between the two modes is equal to $\pi$;

Fig. 8 is a graph of the width of the first section of the stepped MMI of Fig.5(c), when used in as the passband flattening feature in an AWG, plotted (line graph) against Phase difference (between 0th and 2nd order modes), and also plotted (diamond markers) against Chromatic Dispersion;
Fig. 9 schematically illustrates a passband flattening feature designed in accordance with one aspect of the invention; and
Fig. 10 is a schematic plan view of an AWG according to another embodiment.

DETAILED DESCRIPTION OF THE PREFERRED EMBODIMENTS

For the avoidance of doubt, all references herein to "modes" refers to guided waveguide modes (not radiation modes). Moreover, references to "input" and "output" in relation to use of the described AWGs as demultiplexers are not intended to be limiting, in that the AWG could equally be used in reverse as a multiplexer in which case the direction of signal travel through the AWG is reversed.

Customers for optical devices such as filters ask for specifications for Chromatic Dispersion (CD) and Differential Group Delay (DGD) values. Also, the customer will usually specify the passband shape which they require from the filter. To meet this latter specification, multimode structures such as MMIs, parabolic horns and other tapered waveguide structures may be used in order to flatten the passband, as is described in further detail below. However, such multi-mode structures may give rise to unacceptably high chromatic dispersion (CD) and Differential Group Delay (DGD). Here there is provided a method of designing AWGs in a fashion that the Chromatic Dispersion is kept low.

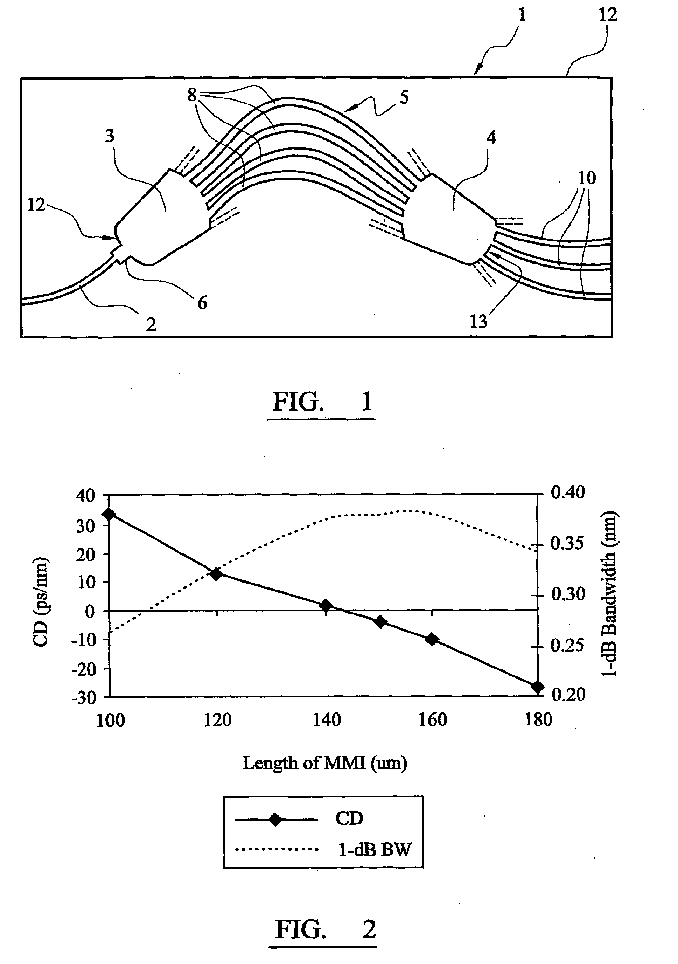

A multiplexer/demultiplexer device of the AWG type, which incorporates a straight-sided multi-mode waveguide for passband flattening, is shown in Fig. 1. The device comprises a substrate or "die" 1 having provided thereon at least one single mode input waveguide 2 for a multiplexed input signal, two free space couplers 3,4 (in the form of "slab" or "star" couplers) connected to either end of an arrayed waveguide grating 5 consisting of an array of transmission waveguides 8, only some of which are shown, and a plurality of single mode output waveguides 10 (only some shown) for outputting respective wavelength channel outputs from the second (output) slab coupler 4 to the edge 15 of the die 1. In generally known manner, there is a constant predetermined optical path length difference between the lengths of adjacent waveguides 8 in the array, which are arranged such that a multiplexed signal input at the input face 12 of the first slab coupler 3 is demultiplexed into different wavelength output channel signals which are focused onto the output face 13 of the second slab coupler 4. In this embodiment, the physical length of the waveguides increases incrementally by the same amount from one waveguide to the next which determines the position of the different wavelength output channels on the output face of the second slab coupler 4. A straight-sided (rectangular-shaped) multi-mode waveguide 6 optically couples one end of the input waveguide 2 to the first slab coupler 3. The waveguides are typically formed as high-index cores of rectangular end cross-section, on the substrate of the die 1. The cores are covered on at least three sides, sometimes on all four sides, by low-index cladding, and they provide horizontal optical waveguiding. The couplers are typically in the form of a slab of the high-index waveguide material, covered by the low index cladding material, to provide vertical waveguiding. However the present invention can also be applied to devices formed using other types of waveguiding structures such as, for example, ridge waveguides or buried waveguides.

An input structure such as an MMI or straight-sided multi-mode waveguide (or other structure giving rise to multiple modes) at the input to the first slab coupler 3 broadens the signal field which is input to the slab coupler. The AWG maps this field in a dispersive manner to the output face 13 of the second slab coupler 4. The field at the output face of the second slab coupler is overlapped with the Eigenmode of the (single mode) output waveguides. This overlap corresponds to a convolution operation, and determines the final shape of the passband.

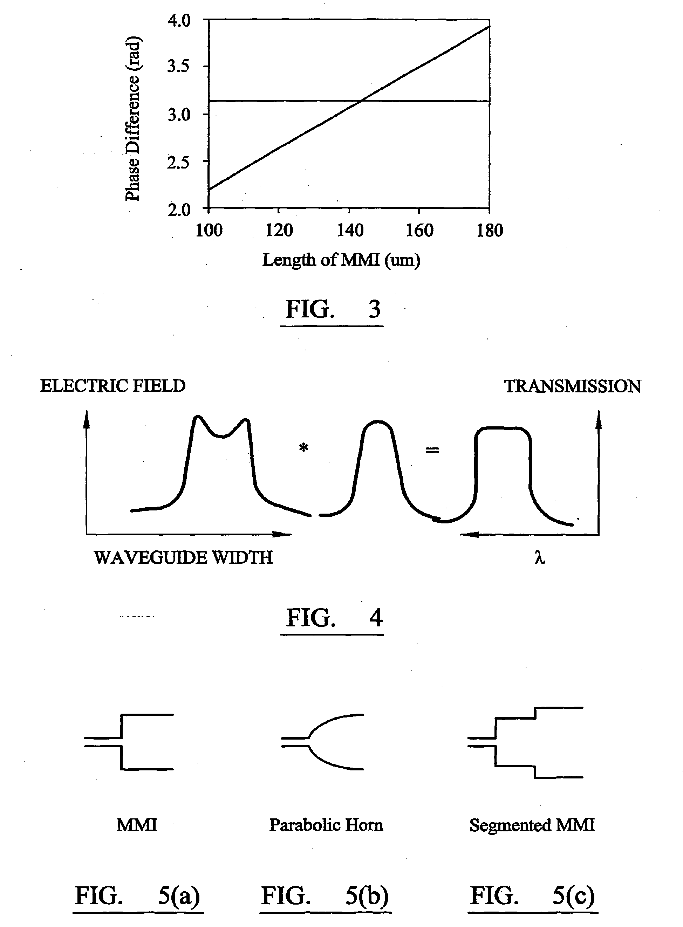

To achieve a passband which has a flattened peak, the input signal field at the input face of the first slab coupler 3 has to be at least double-peaked. This is illustrated in Fig.4. Such a double-peaked input field can be achieved with any structure, at the input to the first slab coupler, which excites additional waveguide modes to the fundamental mode. The mixture of these modes will lead to double peaks. Some structures suitable to excite higher order modes are MMIs and generally rectangular shaped multi-mode waveguides as described in US5,629,992, parabolic horns as described in JP9297228A, or other structures e.g. a stepped waveguide having two different width portions, as shown respectively in Figs.5(a) to (c).

An example calculation of the CD of an AWG device like that of Fig. 1 is plotted in Fig.2 as a function of the length of the MMI, for an MMI having a width of $14\mu m$. The plotted values were obtained using Beam Propagation Method (BPM) simulations, in known manner. It can be seen that for a certain length of MMI (in this case just over $140\mu m$) the CD will be zero.

Fig.3 is a graph of the phase difference between the fundamental and the second order modes at the end of the MMI structure, where it connects to the input face of the first slab coupler, again plotted against the length of the MMI. Again, this graph was obtained from BPM simulations. The constant in the graph of Fig.3 corresponds to $\pi$. It can be seen from Fig.3 that for a specific length of MMI, in this case again just over $140\mu m$, the phase difference is $\pi$. The significance of this in relation to CD is discussed further below.

## Relationship between Phase Front, CD and DGD

The DGD $\Delta\tau_c$ of a filter device is related with its Chromatic Dispersion $D_c$ and its split $\delta\lambda$:

$$\Delta\tau_c = \delta\lambda \cdot D_c$$

where the split $\delta\lambda$ is the difference in passband centre wavelength between the TE and TM polarizations. The Group Delay $\tau_{group}$ and Chromatic Dispersion of an AWG device is calculated from the phase response $\Phi$ of the AWG:

$$\tau_{group} = -\frac{1}{2\pi} \cdot \frac{d\Phi}{df}.$$

The chromatic dispersion, $D_c = \dfrac{d\tau_{group}}{d\lambda}$, follows as:

$$D_c = -\frac{f^2}{2\pi c} \cdot \frac{d^2\Phi}{df^2}.$$

So if the first derivative of the phase response $\Phi$ is flat (as a function of the wavelength/frequency), the chromatic dispersion will be zero.

## Phase Front of an AWG

The electric field of the signal propagating through the AWG is a superposition of all the guided mode field distributions and can be defined as $\Psi(y,z)$, where y is the lateral axis and z is the propagation direction, and $\Psi$ is a complex field. At the output end of the multi-mode waveguide ($z=z_{end}$) used for passband flattening the "phase front" of the signal, at the central frequency $f_c$ of the signal pulse (which has a bandwidth B) can be plotted as the argument (arg) of the complex amplitude of ($A_{gh}$) of the complex field $\Psi(y,z_{end})$, across the (lateral) width M of the multi-mode waveguide. It is here proposed that when this phase front is flat the chromatic dispersion will be zero (or in practice will be at least low, in fabricated devices).

## Design Rule for AWGs using multi-mode waveguides for passband flattening

It is here proposed that the requirement for low CD for an AWG using a multi-mode waveguide to excite at least the second order mode in order to cause passband flattening is that the phase difference $\Phi_0 - \Phi_2$ between the fundamental and second order mode should satisfy the condition:

$$\Phi_0 - \Phi_2 = N \cdot \pi,$$

where $\Phi_0$ represents the phase retardation over the total lengths of the MMIs of its fundamental order mode and $\Phi_2$ the one of the second order mode, and N is any integer number. Typically, the design is for N =1.

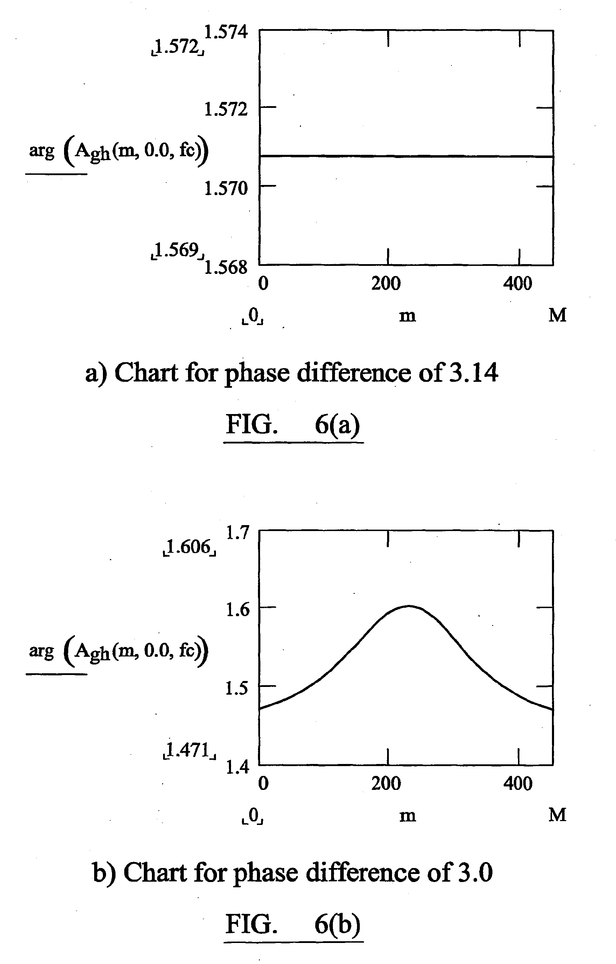

Figs.6(a) and (b) are two charts which illustrate the phase front (calculated using BPM simulation) across the width M of a straight-sided (generally rectangular) multi-mode waveguide, at the output end ($z=z_{end}$) of the multi-mode waveguide. In Fig.6(a) the phase difference $\Phi_0 - \Phi_2 = 3.14$, and in Fig.6(b) the phase difference $\Phi_0 - \Phi_2 = 3.0$. It can be seen that the phase front in Fig.6(b) is not flat, while that in Fig.6(a) is flat.

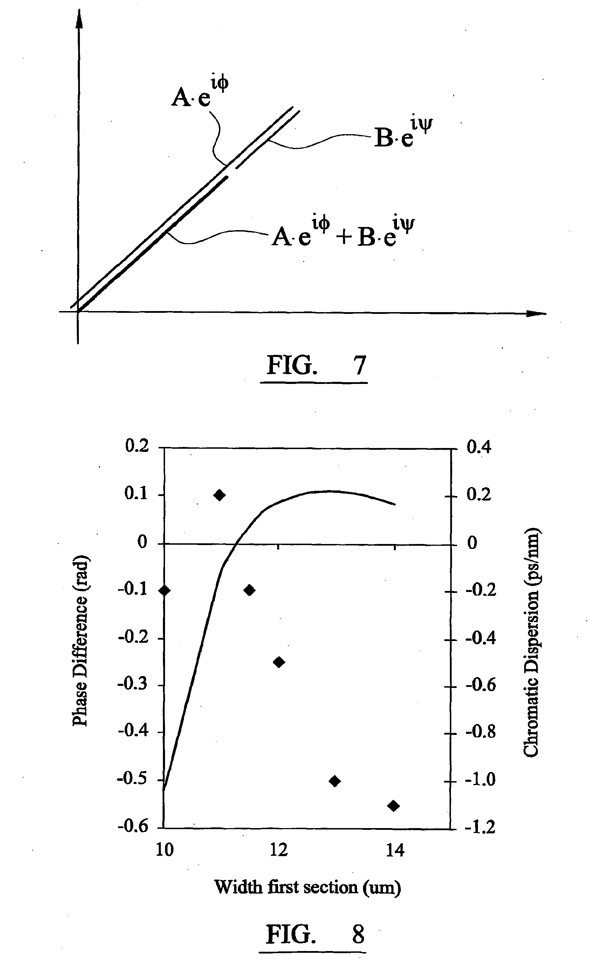

The flat phase front along the cross section of the multi-mode waveguide, of the superposition the two optical modes ($0^{th}$ and $2^{nd}$ order) can in general be explained as follows, with reference to the graph in Fig.7. Assume two signals, $A \cdot e^{i\phi}$ and $B \cdot e^{i\psi}$, representing the 0th and $2^{nd}$ order modes, with A>B>0. For $\psi + \phi = \pi$, the two signals plotted in the complex plane are as shown in Fig.7. It can be seen that the superposed signal $A \cdot e^{i\phi} + B \cdot e^{i\psi}$ has a phase of $\phi$.

The situation for $\psi + \phi = 2\pi$ corresponds. i.e. the superposed signal has a phase of $\phi$.

Thus, it follows that for two functions A and B varying along the cross section of a waveguide, their superposition has a constant phase along this cross section where the phase difference between them is equal to $N\pi$ where N is an integer.

In order to achieve the desired phase difference of $\Phi_0 - \Phi_2 = N\pi$ for the AWG device of Fig.1, in which a straight-sided multi-mode waveguide is disposed between the input waveguide 2 and the first slab coupler 3, we turn to the theory of MMIs proposed by Soldano in Optical Multi-Mode Interference Devices Based on Self Imaging:Principles and Applications, by L. Soldano and E.Pennings, Journal of Lightwave Technology, pp615-627, 1995. According to the theory of "Symmetric Interference" proposed therein, where only the fundamental and second order modes are excited, the phase difference between the fundamental and second order modes is equal to $\pi$, when:

$$L = 3L_\pi/8$$

where $L_\pi$ is the beat length of the fundamental and first order modes. At this length L a double-peak field will be present at the output end of the multi-mode waveguide/MMI. With $L_\pi$ as defined in the afore-mentioned Soldano paper, we find that:

$$L = \frac{n_{slab} \cdot W_{eff}^2}{2\lambda}$$

where $W_{eff}$ is the effective width of the MMI for TE polarization and is defined as:

$$W_{eff} \cong W_0 + \frac{\lambda_0}{\pi} \cdot \frac{n_{clad}}{n_{slab}} \cdot \frac{1}{\sqrt{n_{slab}^2 - n_{clad}^2}}$$

where

$W_O$ is the physical width of the MMI,
$n_{clad}$ is the effective refractive index of the waveguide cladding,
$n_{slab}$ is the effective refractive index of the waveguide core (of the slab),
and $\lambda_0$ is the wavelength of the signal.

The effective refractive index for the fundamental mode and for the second order mode can be found

- using commercially available mode solver software (e.g. the SELENE software sold by Kymata Netherlands of Enschade, Netherlands) or other known mode solving methods; and/or
- with the dispersion relation as discussed in the above-mentioned Soldano paper (This describes how to calculate $k_j$, the effective wave number for the jth mode, assuming propagation of light in a mirrored structure of width $W_{eff}$. The effective indices can be found from $k_j$ in known manner).

In the above design method it will be appreciated that the first order mode is not taken into account. It is generally suppressed as far as possible in practice, by virtue of the input waveguide being centrally located on the input end of the multi-mode waveguide. Furthermore, BPM simulations show that its impact on the chromatic dispersion is small. Also, random phase errors can sometimes be present in any AWG device, due to for - example unavoidable fabrication deviations during manufacture. However, the impact of such random phase errors on the CD and DGD is, we believe, relatively small.
The below table gives a value for the required length, $L_{MMI}$, of the multi-mode waveguide/MMI 6 calculated using the above theory, for the following given values of the other parameters:

| Parameter | Value |
|---|---|
| $n_{core}$ | 1.455 |
| $n_{clad}$ | 1.445 |
| $n_{slab}$ | 1.452 |
| $k_{eff,0}$ | 5.883 |
| $k_{eff,2}$ | 5.861 |
| $W_{MMI}$ | 14$\mu$m |
| $W_{eff}$ | 17.5$\mu$m |
| $L_{MMI}$ | 143$\mu$m |

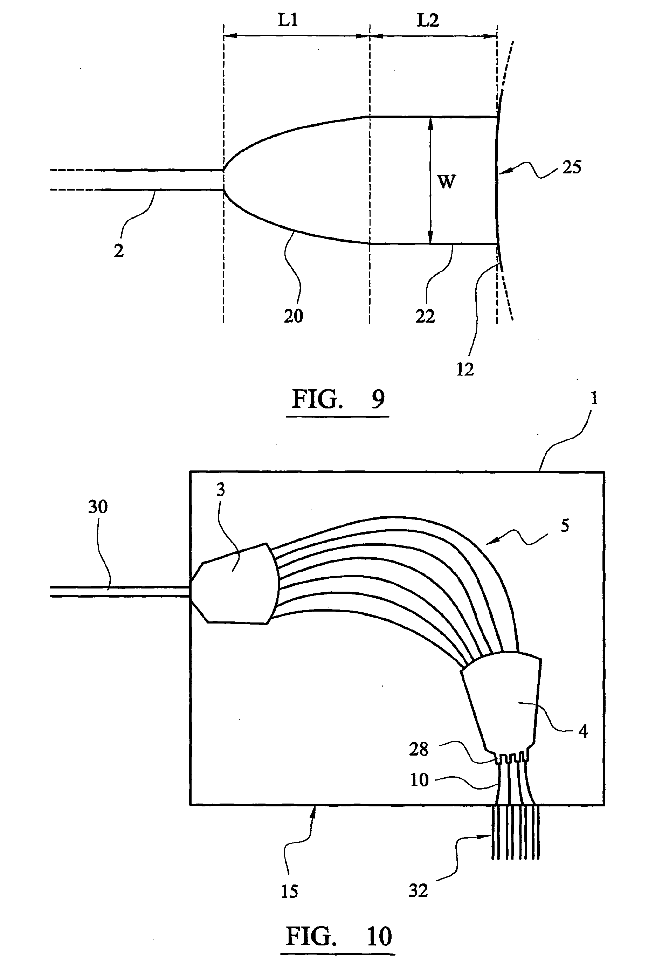

If, instead of the simple rectangular MMI used in the Fig.1 embodiment, a stepped MMII having two sections of different width, as shown in Fig.5(c), is used as the passband flattening feature, we then have additional degrees of freedom which can be exploited to fine tune the chromatic dispersion. The degrees of freedom are the length of each segment of the MMI, and the widths of each segment. The graph of Fix. 8 illustrates the impact of the width of the first segment 10 of the MMI for a first segment length of L1=80$\mu$m, the second segment length is L2=80$\mu$m and the width of the second segment is W2=14$\mu$m, according to our BPM simulations. In this case it can be seen that choosing a width, W1, of the first segment of just over 11$\mu$m should produce a phase difference of approximately zero between the TE$_0$ and TE$_2$ modes.
The above stated design rule can be applied to any type of straight-sided multi-mode waveguide or MMI e.g. waveguides or MMIs with inclined edges ("tapered MMIs"), etc.
It will be noted that although US5,629,992(Amersfoort), suggests making the length L of the MMI equal to L=3L$_\pi$/8 in order to obtain a doubly-peaked field, the patent also suggests that other lengths of rectangular multi-mode waveguide/MMI can be used for passband flattening purposes. However, as we have described above, if such other lengths were to be used, the desired phase difference of N$\pi$ between the fundamental and 2$^{nd}$ order modes will not be present, and so chromatic dispersion and DGD will arise. US5,629,992 does not identify CD as a problem, nor suggest that the length and width of the MMI may influence CD or DGD.
In a modified version of the above technique, the passband flattening structure may, in addition to the multi-mode waveguide used to generate the second order mode, also include a phase shifting waveguide added at the end of the multi-mode waveguide, in order to add an predetermined phase shift between the 0$^{th}$ and 2$^{nd}$ order modes so that the phase difference between the 0$^{th}$ and 2$^{nd}$ order modes at the end of the phase shifting waveguide is N$\pi$, where N is an integer. Fig.9 illustrates a passband flattening structure comprising a parabolically tapered waveguide 20 having its narrowest end connected to an input waveguide 2 of the AWG and its widest end connected to a phase shifting waveguide 22 in the form of a straight-sided waveguide having a width W equal to the width of the widest end of the parabolic waveguide 20. The length L1 of the parabolic waveguide is chosen in order to achieve a desired degree of mode conversion from the fundamental to the second order mode (e.g. approximately 7% mode conversion) for passband flattening. BPM simulations can be used to calculate the phase difference present between the 0th and $2^{nd}$ order modes at the output end 25 (connected to the respective slab coupler) of the parabolic waveguide having the chosen length L1. Then BPM simulations (and/or the theory of MMIs proposed in the above-mentioned Soldano paper) can be used to calculate the necessary length L2 of the phase shifting waveguide 22 required in order that the final phase difference between the $0^{th}$ and $2^{nd}$ order modes at the output end of the phase shifting waveguide is Nπ, for example 2π. This design method can be applied for any type of multi-mode waveguide used to generate higher order modes, not just the parabolic waveguide of this example (e.g. other non-adiabatic tapered waveguides). Moreover, in other possible embodiments the phase shifting waveguide may have curved or curvilinear sides, if desired.

Where the passband flattening feature is not a straight sided (rectangular) MMI and it is not easy to determine the phase difference between the $0^{th}$ and $2^{nd}$ order modes (for example, where the passband flattening feature has a complicated structure, with many degrees of freedom), the phase front of the field output from the passband flattening feature (i.e. the end field of the multi-mode waveguide used for passband flattening) across the width of the passband flattening feature can be calculated with BPM methods/software known to the person skilled in the art. If this phase front is flat, it is proposed that the chromatic dispersion (and consequently also the DGD) of the AWG will be low. By varying one or more of the available shape parameters (i.e. degrees of freedom in the shape) of the PBF feature, for example length and/or width of one or more portions of the PBF feature, and analyzing the effect of this on the phase front (arg), the optimum values for the or each shape parameter to achieve the flattest possible phase front, and hence the lowest CD, can be determined.

An alternative, or additional, technique is to calculate (by BPM simulation) the field response of the AWG at the output side 13 of the second slab, and then to analyse the simulated CD values obtained (from the simulated field response) when one or more of the shape parameters of the PBF feature are varied. The general technique for calculating this field response of an AWG device is as follows:

1) Using BPM, calculate the complex field at the end of the structure that is intended to flatten the response (i.e. at the end of the passband flattening structure);

2) Using BPM, calculate the complex field at the end of second free space coupler 4;
3) Use these fields to compute power and phase distribution in the array
4) Calculate the complex phase response Φ(f) (at the output side of in the second slab coupler) of the AWG with this data using the Gaussian-far field model (see "AWGs in InP using buried waveguides and optical space switches with high on-off ratio in silica", by M Lanker, ETH Diss 13602, ISBN 3-89649-561-5).

The second derivative of this phase response Φ(f) is proportional to the CD, and the DGD is the CD multiplied by the split δλ, as described above.
By varying any given shape parameter and analyzing the resulting simulated phase response and/or CD values obtained therefrom, it is possible to determine what value of the shape parameter will give the lowest CD. Varying individually more than one of the shape parameters and analyzing the respective simulated CD values, one can then determine the best selection of shape factor values overall to achieve minimum CD.
In the above-described embodiments it will be appreciated that a respective identical passband flattening feature 28 could be disposed between the second slab coupler 4 and each output waveguide 10, instead of between the or each input waveguide and the first slab coupler. In possible embodiments of this type (also within the scope of the invention), there may be no input waveguide(s) in the AWG: instead the input signal may be coupled directly into the first slab coupler 3 from an optical fibre 30, the first slab coupler being arranged at the edge of the die 1, as shown in Fig.10. In this case it is the convolution of the broadened signal field received by the output waveguides 32 (via the respective passband flattening features) and the fundamental mode of the optical fibres coupled to the output edge 15 of the die (in use of the AWG device) to receive the different wavelength/frequency channel signals output from the device, that produces the flattened passband. Further modifications and variations to the above-described embodiments are of course possible within the scope of the invention.

**Claims**

1. A method for manufacturing an arrayed waveguide grating (AWG) incorporating at least one passband flattening feature, comprising optimizing the field response by the steps of:

choosing a passband flattening feature for incorporation in an AWG multiplexer/demultiplexer device, the feature having at least one variable shape parameter and the AWG comprising first and second free space couplers (3,4) having a plurality of array waveguides optically coupled therebetween, at least one input waveguide (2) optically coupled to an input side of the first free space coupler (3), and a plurality of output waveguides optically coupled to an output side of the second free space coupler (4);

simulating a field response of the AWG at the output side of the second free space coupler, for a series of values of said at least one variable shape parameter;

calculating the respective chromatic dispersion (CD) of the AWG from the simulated field response of the AWG at each value of the shape parameter;

determining the optimum value of said shape parameter as the value which results in the lowest CD; and

providing the AWG with the passband flattering feature having the determined optimum value for said shape parameter

## Patentansprüche

1. Verfahren zum Herstellen eines Arrayed Waveguide Grating (AWG) mit wenigstens einem Durchlaßband-Abflachungsmerkmal, wobei das Verfahren das Optimieren der Feldantwort durch die folgenden Schritte umfaßt:

Auswählen eines Durchlaßband-Abflachungsmerkmals für die Aufnahme in einer AWG-Multiplexer/Demultiplexer-Vorrichtung, wobei das Merkmal wenigstens einen variablen Formparameter aufweist und das AWG erste und zweite Freistrahlkoppler (3, 4) aufweist mit einer Mehrzahl von Array-Wellenleitern, die optisch dazwischen gekoppelt sind, wenigstens einem Eingangswellenleiter (2), der optisch mit einer Eingangsseite des ersten Freistrahlkopplers (3) gekoppelt ist, und einer Mehrzahl von Ausgangswellenleitern, die optisch mit einer Ausgangsseite des zweiten Freistrahlkopplers (4) gekoppelt sind,

Simulieren einer Feldantwort des AWG an der Ausgangsseite des zweiten Freistrahlkopplers für eine Reihe von Werten des wenigstens einen variablen Formparameters,

Berechnen der jeweiligen chromatischen Dispersion (CD) des AWG aus der simulierten Feldantwort des AWG bei jedem Wert des Formparameters,

Bestimmen des optimalen Wertes des Formparameters als der Wert, der zur geringsten CD führt, und

Versehen des AWG mit dem Durchlaßband-Abflachungsmerkmal mit dem bestimmten optimalen Wert für den Formparameter.

## Revendications

1. Procédé de fabrication d'un réseau sélectif planaire (AWG) intégrant au moins une fonction d'aplatissement de bande passante, comprenant l'optimisation de la réponse de champ par les étapes consistant à :

choisir une fonction d'aplatissement de bande passante pour intégration dans un dispositif multiplexeur/démultiplexeur d'AWG, la fonction ayant au moins un paramètre de forme variable, et l'AWG comprenant des premier et second coupleurs d'espace libre (3, 4) ayant une pluralité de guides d'onde en réseau couplés optiquement entre eux, au moins un guide d'onde d'entrée (2) couplé optiquement à un côté d'entrée du premier coupleur d'espace libre (3), et une pluralité de guides d'onde de sortie couplés optiquement à un côté de sortie du second coupleur d'espace libre (4) ;

simuler une réponse de champ de l'AWG sur le côté de sortie du second coupleur d'espace libre, pour une série de valeurs dudit au moins un paramètre de forme variable ;

calculer la dispersion chromatique (CD) respective de l'AWG à partir de la réponse de champ simulée de l'AWG à chaque valeur du paramètre de forme ;

déterminer la valeur optimale dudit paramètre de forme comme la valeur qui est obtenue dans la CD la plus basse ; et

fournir à l'AWG la fonction d'aplatissement de bande passante ayant la valeur optimale déterminée pour ledit paramètre de forme.

## FIG. 1

## FIG. 2

FIG. 3

FIG. 4

MMI

Parabolic Horn

Segmented MMI

FIG. 5(a)     FIG. 5(b)     FIG. 5(c)

$\arg\left(A_{gh}(m, 0.0, fc)\right)$

a) Chart for phase difference of 3.14

FIG.    6(a)

$\arg\left(A_{gh}(m, 0.0, fc)\right)$

b) Chart for phase difference of 3.0

FIG.    6(b)

FIG. 7

FIG. 8

L1      L2

W

25

2

20      22

12

## FIG. 9

1

30

3

5

4

28

10

15      32

## FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5002350 A
- WO 9723969 A
- US 5629992 A
- JP 9297228 A
- US 6193482 B
- US 2002094166 A

### Non-patent literature cited in the description

- **M K Smit.** PHASAR-based WDM-Devices: Principles, Design and Applications. *IEEE Journal of Selected Topics in Quantum Electronics,* June 1996, vol. 2 (2
- **J. J. He ; B. Lamontagne ; A. Delage ; L. Erickson ; M. Davies ; E. S.Koteles.** Monolithic integrated wavelength demultiplexer based on a waveguide rowland circle grating in In GaAsP/InP. *J. Lightwave Tech.,* 1998, vol. 16, 631-638
- **L. Soldano ; E.Pennings.** Optical Multi-Mode Interference Devices Based on Self Imaging:Principles and Applications. *Journal of Lightwave Technology,* 1995, 615-627
- **M Lanker.** AWGs in InP using buried waveguides and optical space switches with high on-off ratio in silica. *ETH Diss,* ISBN 3-89649-561-5, 13602